# EUROPÄISCHE PATENTSCHRIFT

(11) **EP 4 263 155 B1**
(45) Veröffentlichungstag und Bekanntmachung des Hinweises auf die Patenterteilung: **31.12.2025**
(21) Anmeldenummer: 22701603.7
(22) Anmeldetag: 24.01.2022
(51) Int. Cl.: B25J 17/00, B25J 19/06

(54) **NICHTLINEARES ELASTISCHES GELENK MIT EINEM ELASTISCHEN MECHANISMUS UND ANTRIEBEN**
NONLINEAR ELASTIC JOINT WITH AN ELASTIC MECHANISM AND DRIVES
JOINT ÉLASTIQUE NON LINÉAIRE À MÉCANISME ÉLASTIQUE ET ENTRAÎNEMENTS

(30) Priorität: 26.01.2021 DE 102021000619
(43) Veröffentlichungstag der Anmeldung: 25.10.2023
(73) Patentinhaber: Technische Universität Chemnitz, 09111 Chemnitz (DE)
(72) Erfinder: ZHU, Hongxi, 09111 Chemnitz (DE); THOMAS, Ulrike, 09111 Chemnitz (DE)
(74) Vertreter: Kailuweit & Uhlemann Patentanwälte Partnerschaft mbB
(86) Internationale Anmeldenummer: PCT/EP2022/051467
(87) Internationale Veröffentlichungsnummer: WO 2022/161907

(56) Entgegenhaltungen:
- EP-A1- 2 619 469
- EP-B1- 2 006 055
- CN-A- 110 640 784
- DE-A1- 102018 008 378

## Beschreibung

Die Erfindung betrifft nichtlineare elastische Gelenke mit einem elastischen Mechanismus und Antrieben.

Durch die Druckschrift DE 10 2012 214 094 B3 ist ein Roboter-Gelenksystem mit zwei Gelenkeinrichtungen mit jeweils einem Gelenk, zwei Antriebsmotoren, einer Energiespeichereinrichtung und einer Zusatz-Energiespeichereinrichtung bekannt. Mit der Zusatz-Energiespeichereinrichtung zwischen den beiden Gelenkeinrichtungen kann eine Energieübertragung von einer Gelenkeinrichtung auf die andere und somit von einem Gelenk auf das andere erfolgen. Das Roboter-Gelenksystem ist nur mit einem nicht unerheblichen Aufwand zu realisieren. Insbesondere sind vier Antriebsmotoren erforderlich.

Die Druckschrift DE 10 2006 016 958 A1 offenbart eine antagonistische Schwenkvorrichtung. Diese weist ein um eine Schwenkachse schwenkbares Gelenkelement auf, welches über zwei Kraftübertragungseinrichtungen mit zwei Antriebseinrichtungen verbunden ist. In beide Kraftübertragungseinrichtungen ist eine passiv wirkende Steifigkeits-Einstelleinrichtung integriert, die nicht einstellbar ist.

Die Druckschrift DE 10 2016 226 174 A1 beinhaltet einen nichtlinearen Schwingungsmechanismus mit mehreren starren Elementen, wobei einzelne Segmente über ein Gelenk insbesondere ein Drehgelenk miteinander verbunden sind. Zwischen den Segmenten sind zur Kraft- und/oder Bewegungsübertragung jeweils ein Schwingungselement vorgesehen. Durch die Summe der zusammenwirkenden Schwingungselemente ist ein nichtlineares Schwingungsverhalten vorhanden, ohne dass ein Stellglied notwendig ist. Eine Einstellung des nichtlinearen Schwingungsverhaltens ist nicht vorgesehen.

Durch die Druckschrift EP 2 006 055 B1 ist ein Roboter-Manipulator-Gelenkantrieb mit Drehmomentstütze bekannt. Über den Verdrehwinkel einer Kurvenscheibe variiert die Drehsteifigkeit des elastischen Gelenks.

Die Druckschrift DE 10 2007 014 023 A1 offenbart einen Roboter-Manipulatorarm-Gelenkantrieb, welcher einen Antriebsmotor und ein Antriebsgetriebe besitzt, das eine um eine Axiale drehbare Drehmomentstütze und einen Abtrieb aufweist. Die Drehmomentstütze weist eine in einer Zylinderebene liegende Kurvenscheibe auf, auf der ein durch eine axiale Spannfeder vorgespanntes Kurvenrad läuft.

Durch die Druckschrift EP 2 989 345 B1 ist ein Aktuator mit variabler Steifigkeit und großem Steifheitsbereich bekannt. Eine Feder mit einer einstellbaren Federkonstante umfasst einen Biegestab, der mit einer Drehwelle verbindbar ist und mindestens einen gewölbten Abschnitt aufweist. Mit diesem ist mindestens ein antreibbares Drehstück in Kontakt, so dass die Verbindungssteifigkeit zwischen einer Drehwelle und einem Anschlusselement veränderbar ist.

Die Druckschrift US 10 751 887 B2 beinhaltet einen Mechanismus mit zwei Hauptlenkern, die durch ein Gelenk miteinander gekoppelt sind. Ein Verbindungsmechanismus besitzt eine Schwenkstange, auf der ein Gleitstück angeordnet ist. Das Gleitstück ist über einen Bewegungsmechanismus mit Hebelmechanismen mit dem Gelenk verbunden.

Die Druckschrift US 2019/0 126 498 A1 offenbart einen Aktuator mit variabler Steifigkeit, welcher eine Biegeplatte aufweist. Die Biegeplatte umfasst einen ersten freitragenden Träger, der sich von einem Außenumfang der Biegeplatte nach innen erstreckt. Ein Gehäuse und die Biegeplatte sind um eine gemeinsame Gelenkachse drehbar angeordnet. Ein erstes Kontaktstück ist an einem Drehgelenk schwenkbar am Gehäuse befestigt. Das erste Kontaktstück dreht sich um das Drehgelenk um eine erste Drehachse, welche am Gehäuse gegenüber der Gelenkachse versetzt ist. Das erste Kontaktstück greift in einem variablen Winkel um die Drehachse in den ersten freitragenden Träger ein, um die Steifigkeit einer mechanischen Verbindung zwischen der Biegeplatte und dem Gehäuse einzustellen.

Die Druckschrift JP 2014-097 548 A beinhaltet einen Mechanismus mit variabler Steifigkeit, eine Antriebsvorrichtung mit variabler Steifigkeit und eine Gelenkantriebsvorrichtung. Der Mechanismus umfasst einen Abtriebsarm, eine massive Nocke mit einer Nockenoberfläche und angetriebene Nockenstößel, die sich in Übereinstimmung mit der Verschiebung des Ausgangsarms relativ zu der massiven Nocke bewegen. Weiterhin besitzt der Mechanismus Schraubendruckfedern, die die Nockenstößel gegen die Nockenoberfläche drücken und eine Steifigkeit entsprechend einem Neigungswinkel der Nockenoberfläche liefern. Die Nockenfläche ist dazu so ausgebildet, dass eine Kurvenform des Querschnitts entsprechend einer Position der orthogonalen Richtung der Nockenstößel unterschiedlich wird.

Die Steifigkeit der Mechanismen dieser Druckschriften sind nicht einstellbar.

Die Druckschrift DE 10 2018 008 378 A1 offenbart elastische Gelenke mit einem Antrieb, einem elastischen Mechanismus und einem Abtrieb. Das elastische und damit nachgiebige Gelenk stellt eine Kombination aus einer Kurvenscheibentechnik und einer Hebeltechnik dar. Die Steifigkeit wird mittels des mit den Pivot des Hebelmechanismus verbundenen Stellmechanismus eingestellt. Das übertragbare Drehmoment ist durch die auf Rollen wirkende Federn begrenzt.

Der Erfindung liegt die Aufgabe zugrunde, ein elastisches Gelenk mit variabler Steifigkeit zu schaffen.

Diese Aufgabe wird mit den im unabhängigen Patentanspruch aufgeführten Merkmalen gelöst.

Die nichtlinearen elastischen Gelenke mit einem elastischen Mechanismus und Antrieben zeichnen sich insbesondere durch eine variable Steifigkeit aus.

Dazu besitzt eine mit einem ersten Antrieb verbundene Steuerscheibe auf wenigstens einer Kreisbahn beabstandet zueinander angeordnete Vertiefungen oder Erhöhungen, wobei die Vertiefungen oder die Erhöhungen Bahnen jeweils einer Rolle sind. Die Rollen sind gelenkig mit ersten Hebelarmen zweiseitiger Hebel verbunden. Die zweiten Hebelarme der zweiseitigen Hebel sind gelenkig über ein Verbindungsteil mit einem ersten Ende einer Druckfeder verbunden. Das zweite Ende der Druckfeder ist mit den Rollen und den ersten Hebelarmen verbunden.

Weiterhin sind Pivots der zweiseitigen Hebel an einen Verstellmechanismus mit einem zweiten Antrieb zur Veränderung der Position der Pivots parallel zur Steuerscheibe und damit der Steifigkeit gekoppelt.

Das elastische Gelenk ist damit vorteilhafterweise ein nichtlineares elastisches Gelenk mit variabler Steifigkeit. Das so elastische und damit nachgiebige Gelenk stellt eine Kombination aus einer Steuerscheibe und Hebeln dar, um einen nichtlinearen Mechanismus für ein nichtlineares elastisches Gelenk mit variabler Steifigkeit zu realisieren. Die Steifigkeit wird mittels des mit den Pivots der zweiseitigen Hebel verbundenen Verstellmechanismus eingestellt. Um einen progressiven nichtlinearen Drehmomentverlauf zu gewährleisten, sind die Bahnen der Rollen als Vertiefungen oder Erhöhungen der Steuerscheibe als Kurvenscheibe vorhanden. Die Steuerscheibe ist dazu eine Kreisscheibe oder eine Kreisringscheibe mit den Vertiefungen oder Erhöhungen einer Grundfläche. Durch Drehung der Steuerscheibe wird ein nichtlinearer Drehmomentverlauf realisiert. Die weiterhin wirkende Steifigkeit wird über die Hebel und die Druckfeder verwirklicht. Mehrere Hebel verteilen die Kräfte, so dass ein größeres Drehmoment aufnehmbar ist.

Das Funktionsprinzip beruht darauf, dass wenn sich die Steuerscheibe dreht, die Rollen, die Gelenke der ersten Hebelarme und das zweite Ende der Druckfeder von der Steuerscheibe weg bewegt werden. Gleichzeitig wird das Verbindungsteil und damit das erste Ende der Druckfeder in Richtung der Steuerscheibe bewegt. Die Druckfeder wird komprimiert. Mit Hilfe der verschiebbaren Pivots lässt sich die Steifigkeit des Mechanismus einstellen. Durch die Verschiebung wird eine Änderung der Nachgiebigkeit erreicht, welche durch eine größere Komprimierung der Druckfeder erzeugt wird.

Mit den Hebeln im elastischen Mechanismus sind progressive nichtlineare Winkel-Drehmoment-Eigenschaften realisiert. Weiterhin ist damit das benötigte Drehmoment für die Einstellung der Steifigkeit klein. Die Steifigkeit kann zwischen weich und unendlich starr eingestellt werden, wobei sich im letzteren Fall die Pivots der Hebel in einer der Endlagen der Verschiebung befinden.

Damit eignet sich das nichtlineare elastische Gelenk mit einem elastischen Mechanismus und Antrieben vorteilhafterweise für Roboter. Mit steuerbaren Steifigkeiten kann eine sichere Mensch-Roboter-Interaktion gewährleistet werden. Gleichzeitig können im Kontakt je nach Anforderung hinreichend hohe Kontaktkräfte aufgebracht werden. Damit werden Roboter sicherer und können beispielsweise verschiedene Montageaufgaben oder körperlich schwere Aufgaben im Servicebereich erfüllen.

Vorteilhafte Ausgestaltungen der Erfindung sind in den abhängigen Patentansprüchen angegeben.

Die Vertiefungen oder Erhöhungen weisen vorteilhafterweise eine Bogenform auf oder die Querschnitte der Vertiefungen oder Erhöhungen sind Kreisausschnitte.

Die Druckfeder kann wenigstens bereichsweise in einem topfförmigen Körper mit einem Rand angeordnet sein, wobei sich das zweite Ende der Druckfeder auf dem Topfboden befindet. Die Rollen und die ersten Hebelarme sind mit dem Rand des topfförmigen Körpers verbunden. Damit ist ein kompakter Aufbau mit den Rollen, den zweiseitigen Hebeln, dem Verbindungsteil, der Druckfeder und dem topfförmigen Körper realisiert.

Die Druckfeder ist vorteilhafterweise eine Schraubendruckfeder.

Der Verstellmechanismus kann eine Scheibe mit Öffnungen zur Führung der Pivots aufweisen. Die Scheibe ist dazu beabstandet parallel zur Steuerscheibe angeordnet. Mittels der Öffnungen und durch Drehen können so die Pivots der zweiseitigen Hebel zusammen einfach verstellt werden. Jeder der Pivots ist dazu als Teil eines Winkels oder eines T-Stücks ausgebildet. Bei der letzteren Variante sind für einen Hebel zwei parallel zueinander angeordnete Hebelarme vorhanden, so dass der Querbalken des T-Stücks Pivots dieser Hebelarme eines Hebels sind.

Der Verstellmechanismus kann vorteilhafterweise den zweiten Antrieb entweder mit einer Schneckenwelle in Verbindung mit einer Schneckenwelle besitzen. Die Scheibe ist ein Schneckenrad ist oder weist ein Schneckenrad auf. Ein damit realisiertes Schneckengetriebe ist vorteilhafterweise selbstsperrend, so dass nach einer Bewegung der Pivots eine sichere Position dieser gegeben ist.

Die Steuerscheibe als ein erster Bestandteil des elastischen Mechanismus ist mit dem ersten Antrieb verbunden. Ein zweiter Bestandteil des elastischen Mechanismus sind die Rollen, das Verbindungsteil, die zweiseitigen Hebel, die Druckfeder, der topfförmige Körper und der Verstellmechanismus. Der zweite Bestandteil des elastischen Mechanismus ist der Abtrieb des nichtlinearen elastischen Gelenks.

Der erste Bestandteil des elastischen Mechanismus und der Antrieb können die Bestandteile eines topfförmigen Gehäuses sein, wobei wenigstens ein Bereich der drehbar gelagerten Steuerscheibe der Boden des topfförmigen Gehäuses sind. Die Rollen, das Verbindungsteil, die zweiseitigen Hebel, die Druckfeder, der topfförmige Körper und wenigstens die Scheibe des Verstellmechanismus sind die Teile eines Zylinders, welcher sich wenigstens bereichsweise im topfförmigen Gehäuse befindet. Damit ist ein kompakter Aufbau des mit einem Antrieb versehenen nichtlinearen elastischen Gelenks gegeben.

Die Rollen in Verbindung mit den ersten Hebelarmen können als Bockrollen mit jeweils einem Rahmen und einer darin eingesetzten Rolle ausgebildet sein. Die Rahmen sind gelenkig mit den ersten Hebelarmen der zweiseitigen Hebel verbunden. Weiterhin ist das zweite Ende der Druckfeder mit den ersten Hebelarmen und den Rahmen der Bockrollen verbunden.

Der erste Antrieb, die Steuerscheibe, der zweite Antrieb, die Scheibe und/oder der erste Antrieb ist oder sind optional jeweils einzeln oder in einer Kombination mit einem Drehgeber oder Drehgebern verbunden.

Der Drehgeber oder die Drehgeber kann oder können mit einer Steuereinrichtung verbunden sein. Damit kann die Steifigkeit bestimmt eingestellt werden.

Der Abtrieb kann mit einem Glied eines Roboters verbunden sein oder werden. Weiterhin kann der erste Antrieb in Verbindung mit der Steuerscheibe und der Abtrieb jeweils mit einem Glied eines Roboters verbunden sein oder werden.

Zur Realisierung der Erfindung ist es auch zweckmäßig, die vorbeschriebenen Ausgestaltungen, Ausführungsformen und Merkmale der Ansprüche in jeder Anordnung miteinander zu kombinieren.

Ein Ausführungsbeispiel der Erfindung ist in den Zeichnungen jeweils prinzipiell dargestellt und wird im Folgenden näher beschrieben.

Es zeigen:
- **Fig. 1**: ein Prinzip eines elastischen Mechanismus mit einer Steuerscheibe, zweiseitigen Hebeln und einer Druckfeder in einer ersten Position,
- **Fig. 2**: das Prinzip des elastischen Mechanismus mit den Bestandteilen in einer zweiten Position,
- **Fig. 3**: ein elastischer Mechanismus,
- **Fig. 4**: eine Scheibe eines Verstellmechanismus zur Positionierung von Pivots der Hebel und
- **Fig. 5**: ein elastisches Gelenk mit einem elastischen Mechanismus und Antrieben.

Ein nichtlineares elastisches Gelenk besteht im Wesentlichen aus einem elastischen Mechanismus und Antrieben 18, 19. Der elastische Mechanismus umfasst eine Steuerscheibe 1, Rollen 3, zweiseitige Hebel 4, einen Verstellmechanismus 12, ein Verbindungsteil 5, eine Druckfeder 6 und einen topfförmigen Körper 7.

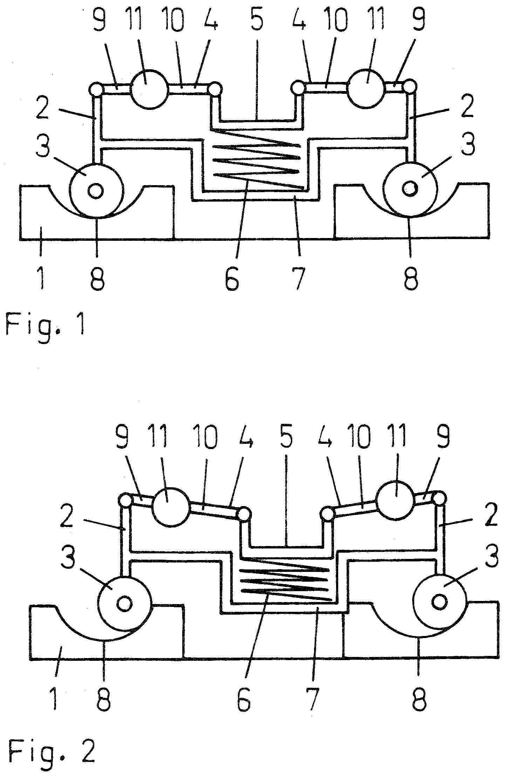

Es zeigen
die Fig. 1 ein Prinzip eines elastischen Mechanismus mit einer Steuerscheibe 1, zweiseitigen Hebeln 4 und einer Druckfeder 6 in einer ersten Position und
die Fig. 2 das Prinzip des elastischen Mechanismus mit den Bestandteilen in einer zweiten Position in prinzipiellen Darstellungen.

Die Steuerscheibe 1 besitzt auf wenigstens einer Kreisbahn beabstandet zueinander angeordnete Vertiefungen 8, wobei die Vertiefungen 8 Bahnen jeweils einer Rolle 3 sind. Die Rollen 3 sind gelenkig mit ersten Hebelarmen 9 der zweiseitigen Hebel 4 verbunden. Die zweiten Hebelarme 10 der zweiseitigen Hebel 4 sind gelenkig über das Verbindungsteil 5 mit einem ersten Ende der Druckfeder 6 verbunden. Das zweite Ende der Druckfeder 6 ist mittels des topfförmigen Körpers 7 mit den Rollen 3 verbunden. Dazu besitzt der topfförmige Körper 7 einen Rand, der mit den Rollen 3 verbunden ist. Das zweite Ende der Druckfeder 6 befindet sich auf dem Topfboden. Die Druckfeder 6 kann eine Schraubendruckfeder 6 sein. Die Vertiefungen 8 können im Querschnitt eine Bogenform oder die Querschnitte von Kreisausschnitten aufweisen. Pivots 11 der zweiseitigen Hebel 4 sind an den Verstellmechanismus 12 zur Veränderung der Position der Pivots 11 parallel zur Steuerscheibe 1 gekoppelt.

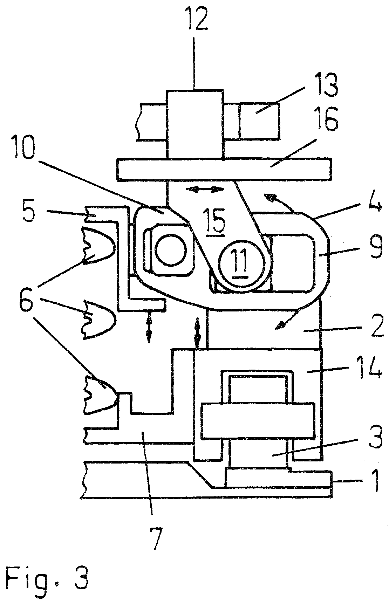

Die Fig. 3 zeigt einen elastischen Mechanismus in einer prinzipiellen Darstellung.

Die Rollen 3 in Verbindung mit den ersten Hebelarmen 9 können Bockrollen 2 mit jeweils einem Rahmen 14 und einer darin eingesetzten Rolle 3 sein. Die Rahmen 14 sind gelenkig mit den ersten Hebelarmen 9 der zweiseitigen Hebel 4 verbunden. Weiterhin ist das zweite Ende der Druckfeder 6 mit den ersten Hebelarmen 9 und den Rahmen 14 der Bockrollen 2 verbunden.

Der Verstellmechanismus 12 ist eine mit einem zweiten Antrieb 19 verbundene Scheibe 13 mit Öffnungen 17 zur Führung der Pivots 11. Die Scheibe 13 ist beabstandet parallel zur Steuerscheibe 1 angeordnet. Mittels der Öffnungen 17 und durch Drehen können so die Pivots 11 der zweiseitigen Hebel 4 zusammen einfach verstellt werden. Jeder der Pivots 11 ist dazu als Teil eines Winkelstücks oder eines T-Stücks 15 ausgebildet. Bei der letzteren Variante sind für einen zweiseitigen Hebel 4 zwei parallel zueinander angeordnete Hebelarme 9, 10 vorhanden, so dass der Querbalken des T-Stücks 15 die Pivots 11 der zweiseitigen Hebel 4 sind. Weiterhin sind die T-Stücke 15 mit den Pivots 11 mittels einer Führung 16 parallel zur Steuerscheibe 1 geführt.

Die Bockrollen 2 sind als nicht schwenkbare Rollen 3 ausgebildet, welche jeweils aus dem Rahmen 14 und der darin eingesetzten Rolle 3 bestehen.

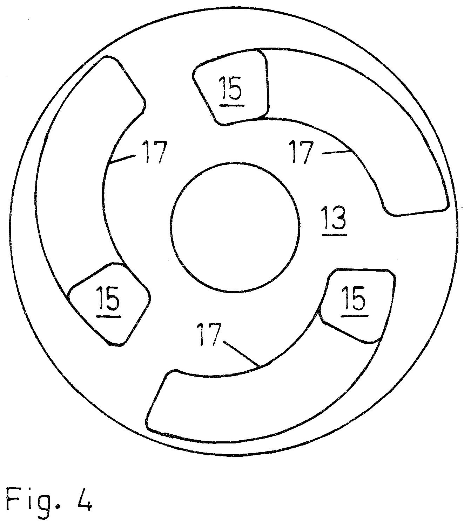

Die Fig. 4 zeigt eine Scheibe 13 eines Verstellmechanismus 12 zur Positionierung von Pivots 11 der zweiseitigen Hebel 4 in einer prinzipiellen Darstellung.

Die Scheibe 13 des Verstellmechanismus 12 besitzt beispielsweise drei Öffnungen 17 zur Führung der T-Stücke 15 der Pivots 11. Die Scheibe 13 ist beabstandet parallel zur Steuerscheibe 1 angeordnet.

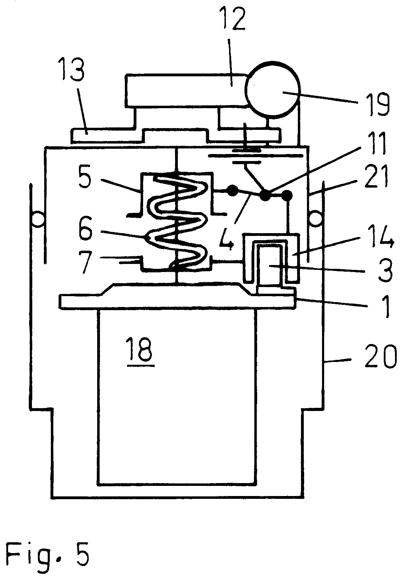

Die Fig. 5 zeigt ein elastisches Gelenk mit einem elastischen Mechanismus, einem ersten Antrieb 18 und einem zweiten Antrieb 19 in einer prinzipiellen Darstellung.

Der zweite Antrieb 19 für die Scheibe 13 ist ein Elektromotor in Verbindung mit einer Schneckenwelle, die in ein Schneckenrad eingreift. Dazu ist die Scheibe 13 ein Schneckenrad oder die Scheibe 13 weist ein Schneckenrad auf. Ein so ausgestaltetes selbsthemmendes Schneckengetriebe ist bekannt. Der Elektromotor und die Schneckenwelle können beabstandet zueinander angeordnet und über ein Zugmittel miteinander verbunden sein.

Die Steuerscheibe 1 als ein erster Bestandteil des elastischen Mechanismus ist mit dem ersten Antrieb 18 verbunden. Der erste Antrieb 18 kann ein Elektromotor mit einem Getriebe sein. Ein zweiter Bestandteil des elastischen Mechanismus sind im Wesentlichen die Bockrollen 2, das Verbindungsteil 5, die zweiseitigen Hebel 4, die Druckfeder 6, der topfförmige Körper 7 und der Verstellmechanismus 12. Der zweite Bestandteil des elastischen Mechanismus ist der Abtrieb des nichtlinearen elastischen Gelenks.

Weiterhin können der erste Bestandteil des elastischen Mechanismus und der erste Antrieb 18 die Bestandteile eines topfförmigen Gehäuses 20 sein, wobei wenigstens ein Bereich der drehbar gelagerten Steuerscheibe 1 der Boden des topfförmigen Gehäuses 20 ist. Die Bockrollen 2, das Verbindungsteil 5, die zweiseitigen Hebel 4, die Druckfeder 6, der topfförmige Körper 7 und wenigstens die Scheibe 13 des Verstellmechanismus 12 können in einem Zylinder 21 angeordnet sein, welcher sich wenigstens bereichsweise im topfförmigen Gehäuse 20 befindet. Dazu kann der Bereich des Zylinders 21 im Gehäuse 20 beispielsweise mit wenigstens einem Wälzkörperlager gelagert sein, so dass der Zylinder 21 mit dem zweiten Bestandteil des elastischen Mechanismus gegenüber dem Gehäuse 20 drehbar und so der Abtrieb des elastischen Mechanismus ist.

Damit werden die Rollen 3, die Gelenke der ersten Hebelarme 9 und das zweite Ende der Druckfeder 6 von der Steuerscheibe 1 wegbewegt, wenn sich die Steuerscheibe 1 dreht. Gleichzeitig wird das Verbindungsteil 5 und damit das erste Ende der Druckfeder 6 in Richtung der Steuerscheibe 1 bewegt. Die Druckfeder 6 wird komprimiert. Mit Hilfe der verschiebbaren Pivots 11 lässt sich die Steifigkeit des Mechanismus einstellen. Durch die Verschiebung wird eine Änderung der Nachgiebigkeit erreicht, welche durch eine größere Komprimierung der Druckfeder 6 erzeugt wird. Der Rahmen 14 kann vorteilhafterweise über eine drehfeste Führung mit dem Zylinder 21 als Abtrieb verbunden sein, so dass der Rahmen 14 in Bezug zu der Scheibe 13 als Bestandteil des Abtriebs zu dieser hin oder von dieser weg verschiebbar ist.

Darüber hinaus können der erste Antrieb 18, die Steuerscheibe 1, der zweite Antrieb 19, die Scheibe 13, der erste Antrieb 18 jeweils einzeln oder in einer Kombination mit einem Drehgeber oder Drehgebern verbunden sein, welcher oder welche vorteilhafterweise mit einer Steuereinrichtung zur bestimmten Einstellung der Steifigkeit verbunden sein können.

## Patentansprüche

1. Nichtlineares elastisches Gelenk mit einem elastischen Mechanismus und Antrieben (18, 19), wobei eine Steuerscheibe (1) als ein erster Bestandteil des elastischen Mechanismus mit einem ersten Antrieb (18) verbunden ist, wobei die Steuerscheibe (1) auf wenigstens einer Kreisbahn beabstandet zueinander angeordnete Vertiefungen (8) oder Erhöhungen besitzt, wobei die Vertiefungen (8) oder Erhöhungen Bahnen jeweils einer Rolle sind, dass die Rollen gelenkig mit ersten Hebelarmen (9) zweiseitiger Hebel (4) verbunden sind, dass zweite Hebelarme (10) der zweiseitigen Hebel (4) gelenkig über ein Verbindungsteil (5) mit einem ersten Ende einer Druckfeder (6) verbunden sind, dass ein zweites Ende der Druckfeder (6) mit den Rollen und den ersten Hebelarmen (9) verbunden ist und dass Pivots (11) der zweiseitigen Hebel (4) an einen Verstellmechanismus (12) mit einem zweiten Antrieb (19) zur Veränderung der Position der Pivots (11) parallel zur Steuerscheibe (1) und damit der Steifigkeit gekoppelt sind, so dass durch den Antrieb der Steuerscheibe (1), die Rollen, die Gelenke der ersten Hebelarme (9) und das zweite Ende der Druckfeder (6) von der Steuerscheibe (1) weg bewegt werden, gleichzeitig das Verbindungsteil (5) und damit das erste Ende der Druckfeder (6) in Richtung der Steuerscheibe (1) bewegt wird, wobei mit Hilfe des verschiebbaren Pivots (11) eine Änderung der Größe der Komprimierung der Druckfeder (6) erzeugt wird, wobei ein zweiter Bestandteil des elastischen Mechanismus die Rollen, das Verbindungsteil (5), die zweiseitigen Hebel (4), die Druckfeder (6) und den Verstellmechanismus (12) umfasst und der zweite Bestandteil des elastischen Mechanismus der Abtrieb des nichtlinearen elastischen Gelenks ist.

2. Nichtlineares elastisches Gelenk nach Patentanspruch 1, **dadurch gekennzeichnet, dass** die Vertiefungen (8) oder Erhöhungen eine Bogenform aufweisen oder dass die Querschnitte der Vertiefungen (8) oder Erhöhungen Kreisausschnitte sind.

3. Nichtlineares elastisches Gelenk nach Patentanspruch 1 oder 2, **dadurch gekennzeichnet, dass** die Druckfeder (6) wenigstens bereichsweise in einem topfförmigen Körper (7) mit einem Rand angeordnet ist, wobei der zweite Bestandteil des elastischen Mechanismus den topfförmigen Körper (7) umfasst, wobei sich das zweite Ende der Druckfeder (6) auf dem Topfboden befindet, und dass die Rollen und die ersten Hebelarme (9) mit dem Rand des topfförmigen Körpers (7) verbunden sind.

4. Nichtlineares elastisches Gelenk nach einem der Patentansprüche 1 bis 3, **dadurch gekennzeichnet, dass** die Druckfeder (6) eine Schraubendruckfeder ist.

5. Nichtlineares elastisches Gelenk nach einem der Patentansprüche 1 bis 4, **dadurch gekennzeichnet, dass** der Verstellmechanismus (12) eine Scheibe (13) mit Öffnungen (17) zur Führung der Pivots (11) aufweist.

6. Nichtlineares elastisches Gelenk nach Patentanspruch 5, **dadurch gekennzeichnet, dass** der Verstellmechanismus (12) den zweiten Antrieb (19) entweder mit einer Schneckenwelle oder in Verbindung mit einer Schneckenwelle besitzt und dass die Scheibe (13) ein Schneckenrad ist oder aufweist.

7. Nichtlineares elastisches Gelenk nach einem der Patentansprüche 1 bis 6, **dadurch gekennzeichnet, dass** der erste Bestandteil des elastischen Mechanismus und der erste Antrieb (18) Bestandteile eines topfförmigen Gehäuses (20) sind, wobei wenigstens ein Bereich der drehbar gelagerten Steuerscheibe (1) der Boden des topfförmigen Gehäuses (20) ist, dass die Rollen, das Verbindungsteil (5), die zweiseitigen Hebel (4), die Druckfeder (6), der topfförmige Körper (7) und wenigstens die Scheibe (13) des Verstellmechanismus (12) die Teile eines Zylinders (21) sind, welcher sich wenigstens bereichsweise im topfförmigen Gehäuse (20) befindet.

8. Nichtlineares elastisches Gelenk nach wenigstens einem der Patentansprüche 1 bis 7, **dadurch gekennzeichnet, dass** die Rollen in Verbindung mit den ersten Hebelarmen (9) Bockrollen (2) mit jeweils einem Rahmen (14) und einer darin eingesetzten Rolle (3) sind, dass die Rahmen (14) gelenkig mit den ersten Hebelarmen (9) der zweiseitigen Hebel (4) verbunden sind und dass das zweite Ende der Druckfeder (6) mit den ersten Hebelarmen (9) und den Rahmen (14) der Bockrollen (2) verbunden ist.

9. Nichtlineares elastisches Gelenk nach wenigstens einem der Patentansprüche 1 bis 8, **dadurch gekennzeichnet, dass** der erste Antrieb (18), die Steuerscheibe (1), der zweite Antrieb (19), die Scheibe (13) und/oder der erste Antrieb (18) jeweils einzeln oder in einer Kombination mit einem Drehgeber oder Drehgebern verbunden ist oder sind.

10. Nichtlineares elastisches Gelenk nach Patentanspruch 9, **dadurch gekennzeichnet, dass** der Drehgeber oder die Drehgeber mit einer Steuereinrichtung verbunden ist oder sind.

11. Nichtlineares elastisches Gelenk nach wenigstens einem der Patentansprüche 1 bis 10, **dadurch gekennzeichnet, dass** der Abtrieb mit einem Glied eines Roboters verbunden ist oder dass der erste Antrieb in Verbindung mit der Steuerscheibe und der Abtrieb jeweils mit einem Glied eines Roboters verbunden sind.

## Claims

1. Nonlinear elastic joint with an elastic mechanism and actuators (18, 19), wherein a control disc (1) as a first component of the elastic mechanism is connected to a first actuator (18), wherein the control disc (1) has, on at least one circular path, recesses (8) or elevations arranged spaced apart from one another, wherein the recesses (8) or elevations form paths for respective rollers, in that the rollers are pivotably connected to first lever arms (9) of two-sided levers (4), in that second lever arms (10) of the two-sided levers (4) are pivotably connected via a connecting part (5) to a first end of a compression spring (6), in that a second end of the compression spring (6) is connected to the rollers and the first lever arms (9), and in that pivots (11) of the two-sided levers (4) are coupled to an adjustment mechanism (12) with a second actuator (19) for changing the position of the pivots (11) parallel to the control disc (1) and thereby the stiffness, such that, by actuating the control disc (1), the rollers, the joints of the first lever arms (9) and the second end of the compression spring (6) are moved away from the control disc (1), while simultaneously the connecting part (5), and thereby the first end of the compression spring (6), is moved towards the control disc (1), wherein by means of the displaceable pivot (11) a change in the amount of compression of the compression spring (6) is generated, wherein a second component of the elastic mechanism comprises the rollers, the connecting part (5), the two-sided levers (4), the compression spring (6) and the adjustment mechanism (12), and the second component of the elastic mechanism is the output of the nonlinear elastic joint.

2. Nonlinear elastic joint according to claim 1, **characterized in that** the recesses (8) or elevations have an arc shape, or **in that** the cross-sections of the recesses (8) or elevations are circular segments.

3. Nonlinear elastic joint according to claim 1 or 2, **characterized in that** the compression spring (6) is arranged at least in sections in a pot-shaped body (7) with a rim, wherein the second component of the elastic mechanism comprises the pot-shaped body (7), wherein the second end of the compression spring (6) is located on the bottom of the pot, and that the rollers and the first lever arms (9) are connected to the rim of the pot-shaped body (7).

4. Nonlinear elastic joint according to any one of claims 1 to 3, **characterized in that** the compression spring (6) is a helical compression spring.

5. Nonlinear elastic joint according to any one of claims 1 to 4, **characterized in that** the adjustment mechanism (12) comprises a disc (13) with openings (17) for guiding the pivots (11).

6. Nonlinear elastic joint according to claim 5, **characterized in that** the adjustment mechanism (12) comprises the second actuator (19) either with a worm shaft or in connection with a worm shaft, and **in that** the disc (13) is or comprises a worm wheel.

7. Nonlinear elastic joint according to any one of claims 1 to 6, **characterized in that** the first component of the elastic mechanism and the first actuator (18) are components of a pot-shaped housing (20), wherein at least a portion of the rotatably mounted control disc (1) is the bottom of the pot-shaped housing (20), that the rollers, the connecting part (5), the two-sided levers (4), the compression spring (6), the pot-shaped body (7), and at least the disc (13) of the adjustment mechanism (12) are parts of a cylinder (21), which is arranged at least in sections in the pot-shaped housing (20).

8. Nonlinear elastic joint according to at least one of claims 1 to 7, **characterized in that** the rollers, in connection with the first lever arms (9), are trolley rollers (2) each comprising a frame (14) and a therein mounted roller (3), that the frames (14) are pivotably connected to the first lever arms (9) of the two-sided levers (4), and that the second end of the compression spring (6) is connected to the first lever arms (9) and the frames (14) of the trolley rollers (2).

9. Nonlinear elastic joint according to at least one of claims 1 to 8, **characterized in that** the first actuator (18), the control disc (1), the second actuator (19), the disc (13), and/or the first actuator (18) are each connected individually or in combination with a rotary encoder or rotary encoders.

10. Nonlinear elastic joint according to claim 9, **characterized in that** the rotary encoder or the rotary encoders is or are connected to a control device.

11. Nonlinear elastic joint according to at least one of claims 1 to 10, **characterized in that** the output is connected to a link of a robot, or **in that** the first actuator, in connection with the control disc, and the output are each connected to a link of a robot.

## Revendications

1. Joint élastique non linéaire comportant un mécanisme élastique et des entraînements (18, 19), un disque de commande (1) étant relié à un premier entraînement (18) en tant que premier composant du mécanisme élastique, le disque de commande (1) présentant des creux (8) ou des saillies espacées les unes des autres sur au moins une trajectoire circulaire, chaque creux (8) ou saillie étant une piste d'une roulette, les roulettes étant reliées de manière articulée à des premiers bras de levier (9) de leviers à deux côtés (4), des seconds bras de levier (10) des leviers à deux côtés (4) étant reliés de manière articulée, via une pièce de liaison (5), à une première extrémité d'un ressort de compression (6), une seconde extrémité du ressort de compression (6) étant reliée aux roulettes et aux premiers bras de levier (9) et des pivots (11) des leviers à deux côtés (4) étant couplés à un mécanisme de réglage (12) par un second entraînement (19) permettant de modifier la position des pivots (11) parallèlement au disque de commande (1), et donc la rigidité de telle sorte que les roulettes, les joints des premiers bras de levier (9) et la seconde extrémité du ressort de compression (6) s'éloignent du disque de commande (1) par l'entraînement du disque de commande (1), tandis que simultanément la pièce de liaison (5), et donc la première extrémité du ressort de compression (6), est déplacée vers le disque de commande (1), une variation de l'amplitude de compression du ressort de compression (6) étant générée à l'aide du pivot coulissant (11), un second composant du mécanisme élastique comprenant les roulettes, la pièce de liaison (5), les leviers à deux côtés (4), le ressort de compression (6) et le mécanisme de réglage (12) et le second composant du mécanisme élastique étant la sortie du joint élastique non linéaire.

2. Joint élastique non linéaire selon la revendication 1, **caractérisée en ce que** les creux (8) ou les saillies ont une forme arquée ou **en ce que** les sections transversales des creux (8) ou des saillies sont des segments de cercle.

3. Joint élastique non linéaire selon la revendication 1 ou 2, **caractérisé en ce que** le ressort de compression (6) est disposé au moins par endroits à l'intérieur d'un corps en forme de pot (7) muni d'un bord, le second composant du mécanisme élastique comprenant le corps en forme de pot (7), la seconde extrémité du ressort de compression (6) étant située sur le fond du pot, et **en ce que** les roulettes et les premiers bras de levier (9) sont reliés au bord du corps en forme de pot (7).

4. Joint élastique non linéaire selon l'une quelconque des revendications 1 à 3, **caractérisé en ce que** le ressort de compression (6) est un ressort de compression hélicoïdal.

5. Joint élastique non linéaire selon l'une quelconque des revendications 1 à 4, **caractérisé en ce que** le mécanisme de réglage (12) comprend un disque (13) comportant des ouvertures (17) pour guider les pivots (11).

6. Joint élastique non linéaire selon la revendication 5, **caractérisé en ce que** le mécanisme de réglage (12) comporte un second entraînement (19) soit avec une vis sans fin, soit en liaison avec une vis sans fin et **en ce que** le disque (13) est ou comprend une roue à vis sans fin.

7. Joint élastique non linéaire selon l'une quelconque des revendications 1 à 6, **caractérisé en ce que** le premier composant du mécanisme élastique et le premier entraînement (18) sont des composants d'un boîtier en forme de pot (20), dont au moins une partie du disque de commande (1) pivotant constitue la base dudit boîtier en forme de pot (20), **en ce que** les roulettes, la pièce de liaison (5), les leviers à deux côtés (4), le ressort de compression (6), le corps en forme de pot (7) et au moins le disque (13) du mécanisme de réglage (12) sont des parties d'un cylindre (21) situé au moins par endroits à l'intérieur du boîtier en forme de pot (20).

8. Joint élastique non linéaire selon au moins une des revendications 1 à 7, **caractérisée en ce que** les roulettes, en liaison avec les premiers bras de levier (9), sont des roulettes fixes (2) comportant chacune un cadre (14) et une roulette (3), **en ce que** les cadres (14) sont reliés de manière articulée aux premiers bras de levier (9) des leviers à deux côtés (4) et **en ce que** la seconde extrémité du ressort de compression (6) est reliée aux premiers bras de levier (9) et aux cadres (14) des roulettes fixes (2).

9. Joint élastique non linéaire selon au moins une des revendications 1 à 8, **caractérisée en ce que** le premier entraînement (18), le disque de commande (1), le second entraînement (19), le disque (13) et/ou le premier entraînement (18) est ou sont chacun, individuellement ou conjointement, relié ou reliés à un codeur rotatif ou des codeurs rotatifs.

10. Joint élastique non linéaire selon la revendication 9, **caractérisée en ce que** le codeur rotatif ou les codeurs rotatifs sont reliés à un dispositif de commande.

11. Joint élastique non linéaire selon au moins une des revendications 1 à 10, **caractérisé en ce que** la sortie est reliée à un membre d'un robot ou **en ce que** le premier entraînement en liaison avec le disque de commande et la sortie sont reliés chacun à un membre d'un robot.
